# EUROPEAN PATENT APPLICATION

(11) **EP 4 679 699 A1**
(43) Date of publication of application: **14.01.2026**
(21) Application number: 23938461.3
(22) Date of filing: 23.05.2023
(51) Int. Cl.: H02M 3/28

(54) **ELECTRIC POWER CONVERSION APPARATUS**

(71) Applicant: Mazda Motor Corporation, Aki-gun Hiroshima 730-8670 (JP)
(72) Inventor: LUNG, Chienru, Aki-gun, Hiroshima 730-8670 (JP)
(74) Representative: Lorenz Seidler Gossel Part. mbB
(86) International application number: PCT/JP2023/019158
(87) International publication number: WO 2024/241493

(57) **Abstract**

Disclosed is a DC/DC converter 1 including a circuit 40 in which a chopper circuit 40b is integrated with a converter circuit 40a including an LLC circuit. The chopper circuit 40b includes a reactor 33 that is arranged on a connecting wire 44 connecting a portion between a first device 34 and a diode 35 of a bridge circuit 43 and a portion between two power devices 19 of a positive-side half-bridge circuit 12a. A controller 4 performs both step-up and step-down operations by switching a first switching element S1 of the first device 34 in different patterns.

## Description

### TECHNICAL FIELD

The technique disclosed herein relates to a power conversion device (ELECTRIC POWER CONVERSION APPARATUS).

### BACKGROUND ART

As a power conversion device, there is a DC/DC converter that converts DC power. In recent years, DC/DC converters that employ an LLC circuit (resonance circuit) including two coils and one capacitor as main parts have been increasing. The LLC circuit is advantageous for large power, low loss, high efficiency, downsizing, or the like.

Electrification of motor vehicles is progressing. Thus, more motor vehicles are now equipped with a high voltage drive battery (e.g., several hundred volts), which serves as the power source for the drive motor that propels the motor vehicle. These motor vehicles are also equipped with a DC/DC converter as a drive-related electrical component, together with an inverter or the like.

The DC/DC converter must handle voltages from a low voltage (12 V) of conventional batteries to a high voltage for driving. Therefore, the range of output voltages required for the DC/DC converter is wide. Further, the DC/DC converter needs to handle both charging and discharging.

However, with only the circuits included in the DC/DC converter, the range of output voltages that can be varied is limited. For example, the range of output voltages can only be expanded by changing the range of the resonance frequency, the winding ratio of the transformer, or the like.

To address this, Patent Document 1 discloses a technology of expanding the range of output voltages by devising the transformer.

Specifically, Patent Document 1 discloses a DC/DC converter of a CLLC scheme. The primary coil of the transformer of the DC/DC converter is configured as two coils connected in series via a switch. The winding ratio of the transformer is changeable by connecting or disconnecting the switch.

The DC/DC converter also has three inductors and two capacitors. The DC/DC converter is configured to perform charging and discharging by using the resonance of the above-described switch, the three inductors, and the two capacitors. The above-described switch is kept in a connected state during charging and is kept in a disconnected state during discharging.

### CITATION LIST

### PATENT DOCUMENTS

Patent Document 1: Japanese Unexamined Patent Publication No. 2020-167881

### SUMMARY OF THE INVENTION

### TECHNICAL PROBLEM

In the case of the DC/DC converter of Patent Document 1, the output voltage is limited to a range obtained by two different winding ratios. Therefore, when the drive battery is changed and its output voltage changes, the DC/DC converter may not be able to adapt to the change. That is, the technique disclosed in Patent Document 1 has the disadvantage of lacking versatility.

Therefore, this description discloses a technique that can adapt to a relatively wide range of output voltages and allows easy control. Specifically, the LLC circuit is combined and integrated with a chopper circuit, and the circuit configuration and its control are devised.

### SOLUTION TO THE PROBLEMS

The technique disclosed herein relates to a power conversion device provided with a circuit in which a chopper circuit is integrated with a converter circuit including an LLC circuit.

The converter circuit includes: a transformer having a primary coil and a secondary coil; a positive-side half-bridge circuit and a negative-side half-bridge circuit, each having two power devices connected in series, each of the power devices including a switching element and a freewheeling diode connected in antiparallel with the switching element; an upper intermediate wiring connecting an end of the primary coil on a positive side and a portion between the two power devices of the positive-side half-bridge circuit; a lower intermediate wiring connecting an end of the primary coil on a negative side and a portion between the two power devices of the negative-side half-bridge circuit; a resonant capacitor arranged on the upper intermediate wiring; a positive main line connected to positive sides of the positive-side half-bridge circuit and the negative-side half-bridge circuit; a negative main line connected to negative sides of the positive-side half-bridge circuit and the negative-side half-bridge circuit; and a second capacitor connected between the positive main line and the negative main line, while being in parallel with the positive-side half-bridge circuit and the negative-side half-bridge circuit.

The chopper circuit includes: a positive line connected to a positive-side input terminal; a negative line connected to a negative-side input terminal; a first capacitor connected between the positive line and the negative line; a bridge circuit connected between the positive line and the negative line, the bridge circuit including a first device constituted by the power device and a diode, the first device and the diode being arranged in series; a connecting wire connecting a portion between the first device and the diode of the bridge circuit and a portion between the two power devices of the positive-side half-bridge circuit; and a reactor arranged on the connecting wire.

The power conversion device further includes a controller configured to perform switching control of each of the switching elements, and the controller performs both step-up and step-down operations by switching, in different patterns, a first switching element that is the switching element of the first device.

That is, the power conversion device is provided with a converter circuit that includes an LLC circuit. It is therefore advantageous in addressing large power, low loss, high efficiency, downsizing, and the like. Further, the converter circuit is integrated with the chopper circuit in a specific combination. The controller switches the first switching element arranged in the chopper circuit in different patterns.

Accordingly, this power conversion device can perform both step-up and step-down operations in a relatively wide output range. Further, such an integrated circuit can reduce the output voltage from the chopper circuit to the converter circuit. The capacitance of the first capacitor can thus be reduced.

The power conversion device may be such that the switching control of the first switching element employs a PWM scheme that changes a duty cycle, and that a period in which the first switching element is turned on and the switching element of the power device arranged in a lower arm of the positive-side half-bridge circuit and the switching element of the power device arranged in an upper arm of the negative-side half-bridge circuit are turned on, is set to be longer in the step-up operation than in the step-down operation.

In this way, it is possible to achieve both step-up and step-down operations with simple control. Further, these operations can be adjusted.

The power conversion device may also be such that a period in which the first switching element is turned off and the switching element of the power device arranged in the lower arm of the positive-side half-bridge circuit and the switching element of the power device arranged in the upper arm of the negative-side half-bridge circuit are turned on, is set in the step-down operation and is not set in the step-up operation.

This configuration can achieve a wider output range.

The power conversion device may also be such that the controller performs peak current control to perform switching of the first switching element.

This configuration allows downsizing of the reactor in the chopper circuit.

The power conversion device may also be such that an operating frequency of the LLC circuit is fixed to an upper limit of a resonance frequency.

This configuration can simplify the control. Further, the magnetizing inductance of the LLC circuit can be made sufficiently large. Further, zero voltage switching (ZVS) can be achieved, that is, switching can be performed in a state where the voltage is zero, over a wide range of load current flowing through the LLC circuit. Therefore, switching losses can be reduced, enabling efficient operation.

The power conversion device may also be such that a turns ratio of the primary coil to the secondary coil is set to 1: 1.

This configuration allows downsizing of the transformer as well. Accordingly, the LLC circuit can be reduced in size and improved in efficiency.

The power conversion device may also be of a type in which the first device in the bridge circuit is arranged closer to the positive line, whereas the diode in the bridge circuit is arranged closer to the negative line, and the negative line and the negative main line are connected to each other.

In this type, the aforementioned integrated circuit can be configured using a conventional step-down chopper circuit and a converter circuit.

The power conversion device may also be of a type in which the first device in the bridge circuit is arranged closer to the negative line, whereas the diode in the bridge circuit is arranged closer to the positive line, and the positive line and the positive main line are connected to each other.

In this type, the aforementioned integrated circuit can be configured using a conventional step-up chopper circuit and a converter circuit.

The power conversion device may further includes: two rectifier bridge circuits in which two diodes are connected in series to each other; and a secondary-side intermediate wiring connecting each of ends of the secondary coil and a portion between the two diodes of a corresponding one of the rectifier bridge circuits, and the power conversion device may be configured to convert DC power and unidirectionally output the DC power thus converted, from a primary side to a secondary side.

The power conversion device may further include: two secondary-side half-bridge circuits in which two power devices are connected in series to each other; and a secondary-side intermediate wiring connecting each of ends of the secondary coil and a portion between the two power devices of a corresponding one of the secondary-side half-bridge circuits, and the power conversion device may be configured to convert DC power and bidirectionally output the DC power thus converted, from a primary side to a secondary side and from the secondary side to the primary side.

Thus, the technique disclosed herein is applicable to a type of power conversion device that converts DC power and outputs the converted DC power unidirectionally from the primary side to the secondary side, and also to a type of power conversion device that converts DC power and outputs the converted DC power bidirectionally from the primary side to the secondary side and from the secondary side to the primary side.

### ADVANTAGES OF THE INVENTION

According to the technique disclosed herein, control of the output voltage can be easily performed over a relatively wide range.

### BRIEF DESCRIPTION OF DRAWINGS

[FIG. 1] FIG. 1 is an explanatory diagram of a basic configuration of the technique disclosed herein.
[FIG. 2] FIG. 2 is an explanatory diagram of a conventional circuit. (a) is an example of a circuit of a conventional LLC converter. (b) is an example of a conventional step-down chopper circuit. (c) is an example of a conventional step-up chopper circuit.
[FIG. 3] FIG. 3 is a circuit diagram of an integrated circuit in the DC/DC converter.
[FIG. 4A] FIG. 4A shows switching waveforms during a step-up operation.
[FIG. 4B] FIG. 4B shows switching waveforms during a step-down operation.
[FIG. 5A] FIG. 5A is an image of a current path in a period P1.
[FIG. 5B] FIG. 5B is an image of a current path in a period P2.
[FIG. 5C] FIG. 5C is an image of a current path in a period P3.
[FIG. 5D] FIG. 5D is an image of a current path in a period P4.
[FIG. 6] FIG. 6 is a block diagram relating to peak current control and related equations thereof.
[FIG. 7] FIG. 7 is a diagram showing a switching pattern and the like in the peak current control.
[FIG. 8] FIG. 8 is a resonance curve of an LLC circuit.
[FIG. 9A] FIG. 9A is a diagram showing the simulation results confirming the effect (first case).
[FIG. 9B] FIG. 9B is a diagram showing the simulation results confirming the effect (second case).
[FIG. 9C] FIG. 9C is a diagram showing the simulation results confirming the effect (third case).
[FIG. 10] FIG. 10 is a circuit diagram of an integrated circuit in a DC/DC converter according to Variation 1.
[FIG. 11] FIG. 11 is a circuit diagram of an integrated circuit in a DC/DC converter according to Variation 2.
[FIG. 12] FIG. 12 is a circuit diagram of an integrated circuit in a DC/DC converter according to Variation 3.

### DESCRIPTION OF EMBODIMENTS

Hereinafter, embodiments of the technique disclosed herein will be described. It should be noted that the following description is merely illustrative in nature. In the description, the same reference characters are used for the same components. When there are a plurality of identical components, these components may be distinguished from each other by alphabets or the like. For convenience of description, the same members may be denoted by different reference characters.

### <Basic Configuration of Technique Disclosed Herein>

The technique disclosed herein relates to a power conversion device configured to convert input DC power and output the converted power. The technique disclosed herein is suitable for, for example, in-vehicle DC/DC converters. The following disclosure explains the technique using an in-vehicle DC/DC converter 1 as an example.

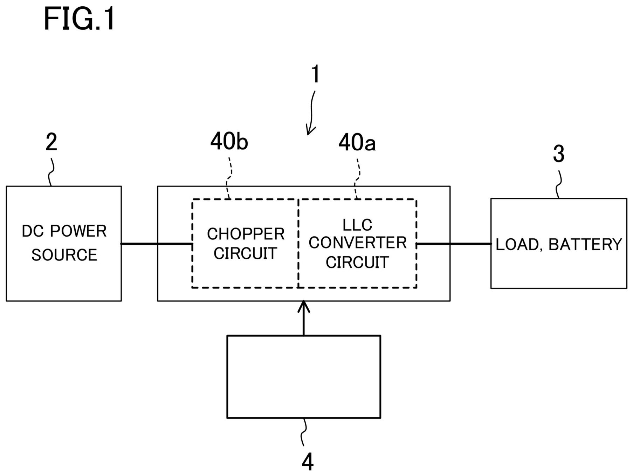

FIG. 1 schematically shows a configuration of a basic system of a DC/DC converter 1 to which the technique disclosed herein is applied. The DC/DC converter 1 is connected to a controller 4 via wiring for low voltage. The controller 4 controls operations of the DC/DC converter 1 by switching control described later.

The DC/DC converter 1 is connected to a DC power source 2, such as a drive battery, via wiring for high voltage. The DC/DC converter 1 is connected to a device 3, such as a load (e.g., drive motor) and battery, via wiring for high voltage. The voltage is different between the input side of the DC/DC converter 1 having the DC power source 2 and the output side of the DC/DC converter 1 having the device 3 such as the load or the battery.

When the input side of the DC/DC converter 1 has a lower voltage than the output side, the DC/DC converter 1 can convert the DC power (current and voltage) input from the DC power source 2 into a higher voltage and output the converted voltage to the device 3 such as the load or the battery (step-up operation). Further, when the voltage on the input side of the DC/DC converter 1 is higher than that on the output side, the DC/DC converter 1 can also convert the voltage to a lower voltage and output the converted voltage to the device 3 such as the load or the battery (step-down operation). In other words, the DC/DC converter 1 is configured to perform both step-up and step-down operations.

The DC/DC converter 1 is a so-called LLC converter that employs a publicly known LLC scheme. Such a DC/DC converter 1 includes a chopper circuit together with an LLC circuit. That is, in the DC/DC converter 1, a chopper circuit 40b is combined with a converter circuit 40a including the LLC circuit, as will be described later, and therefore, a new circuit 40 in which these circuits are integrated is formed.

### (Conventional Circuit Configuration)

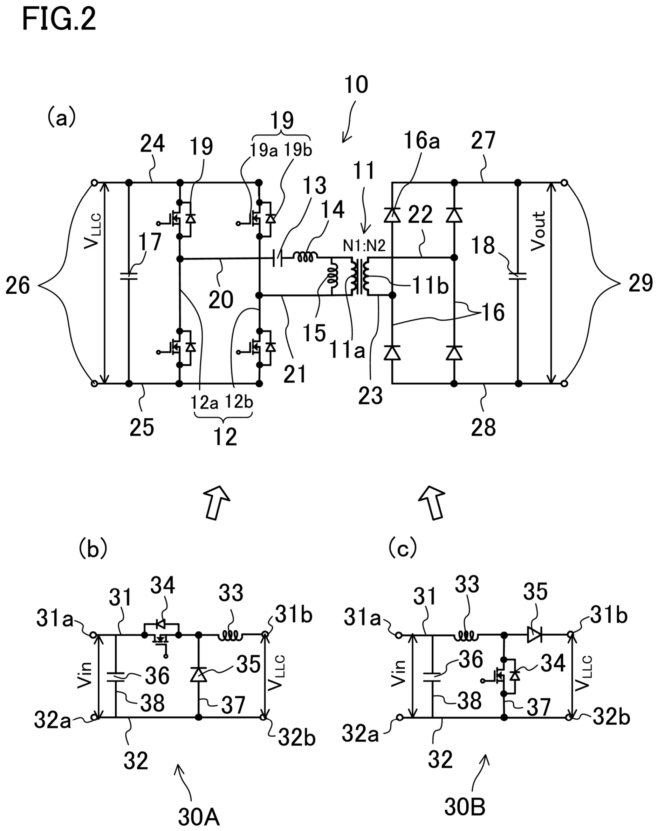

The (a) of FIG. 2 is an example of a circuit of a conventional LLC converter. The (b) of FIG. 2 is an example of a conventional step-down chopper circuit. The (c) of FIG. 2 is an example of a conventional step-up chopper circuit.

### (Conventional LLC Converter)

The LLC converter 10 shown is of a full bridge type. The LLC converter 10 is configured by a transformer 11, two half-bridge circuits 12 (a positive-side half-bridge circuit 12a and a negative-side half-bridge circuit 12b), a resonant capacitor 13, a resonant inductance 14 (leakage inductance), a magnetizing inductance 15, two rectifier bridge circuits 16, a primary-side smoothing capacitor 17, a secondary-side smoothing capacitor 18, and the like.

The transformer 11 has a primary coil 11a and a secondary coil 11b. N1 is the number of turns of the primary coil 11a, and N2 is the number of turns of the secondary coil 11b. N1:N2 represents a turns ratio. In the rectifier bridge circuit 16, two diodes 16a arranged in the forward direction are connected in series to each other.

In the half-bridge circuit 12, two power devices 19 are connected in series to each other. The power devices 19 each include a switching element 19a and a freewheeling diode 19b connected in antiparallel with the switching element 19a. Examples of the switching element 19a includes MOSFET, IGBT, and the like.

An end of the primary coil 11a on the positive side is connected to a portion between two power devices 19 of the positive-side half-bridge circuit 12a, via a primary-side upper intermediate wiring 20. In the primary-side upper intermediate wiring 20, the resonant inductance 14 and the resonant capacitor 13 are connected in series to each other.

An end of the primary coil 11a on the negative side is connected to a portion between two power devices 19 of the negative-side half-bridge circuit 12b, via a primary-side lower intermediate wiring 21. The magnetizing inductance 15 is an inductance generated by the main magnetic flux of the transformer 11.

Here, the magnetizing inductance 15 is shown as an equivalent circuit. The resonant inductance 14, the magnetizing inductance 15, and the resonant capacitor 13 constitute an LLC circuit. The resonant inductance 14 may be a parasitic element of the transformer 11, similarly to the magnetizing inductance 15.

An end of the secondary coil 11b on the positive side is connected to a portion between two diodes 16a of one of the rectifier bridge circuits 16, via a secondary-side upper intermediate wiring 22. An end of the secondary coil 11b on the negative side is connected to a portion between two diodes 16a of the other rectifier bridge circuit 16, via a secondary-side lower intermediate wiring 23.

Each of the half-bridge circuits 12 is connected to each of the pair of input terminals 26 via a primary-side positive main line 24 and a primary-side negative main line 25, while being in parallel with the primary-side smoothing capacitor 17. DC voltage V_{LLC} is applied between the pair of input terminals 26. Each of the rectifier bridge circuits 16 is connected to each of the pair of output terminals 29 via a secondary-side positive main line 27 and a secondary-side negative main line 28, while being in parallel with the secondary-side smoothing capacitor 18. DC voltage Vout is output between the pair of output terminals 29.

### (Conventional Chopper Circuit)

As mentioned above, the (b) of FIG. 2 shows a step-down chopper circuit 30A. The (c) of FIG. 2 shows a step-up chopper circuit 30B. Each of these is configured by a positive line 31, a negative line 32, a reactor 33, a power device 34, a diode 35, a capacitor 36, and the like.

The power device 34 is the same member as the power device 19 described above. The diode 35 is also the same member as the diode 16a described above. The positive line 31 connects a positive-side input terminal 31a and a positive-side output terminal 31b. The negative line 32 connects a negative-side input terminal 32a and a negative-side output terminal 32b.

In the case of the step-down chopper circuit 30A, the power device 34 and the reactor 33 are arranged on the positive line 31. The power device 34 is arranged closer to the positive-side input terminal 31a, whereas the reactor 33 is arranged closer to the positive-side output terminal 31b. An output-side bridge line 37 is arranged between the negative line 32 and a portion of the positive line 31 between the power device 34 and the reactor 33. The diode 35 is arranged on this output-side bridge line 37. The diode 35 is arranged so that a current flows from the negative side to the positive side.

An input-side bridge line 38 is arranged between the negative line 32 and a portion of the positive line 31 between the power device 34 and the positive-side input terminal 31a. The capacitor 36 is arranged on this input-side bridge line 38. A DC voltage Vin is applied between the positive-side input terminal 31a and the negative-side input terminal 32a. A DC voltage V_{LLC} is output between the positive-side output terminal 31b and the negative-side output terminal 32b.

In the case of the step-up chopper circuit 30B, the reactor 33 and the diode 35 are arranged on the positive line 31. The reactor 33 is arranged closer to the positive-side input terminal 31a, whereas the diode 35 is arranged closer to the positive-side output terminal 31b. The diode 35 is arranged so that a current flows from the input side to the output side. The output-side bridge line 37 is arranged between the negative line 32 and a portion of the positive line 31 between the reactor 33 and the diode 35. The power device 34 is arranged on this output-side bridge line 37. The other configurations of the step-up chopper circuit 30B are the same as those of the step-down chopper circuit 30A.

When such a conventional step-down chopper circuit 30A or step-up chopper circuit 30B described above is combined with the circuit in the above-described LLC converter 10, it is common to combine only one of them. That is, the positive-side output terminal 31b and the negative-side output terminal 32b of the step-down chopper circuit 30A or the step-up chopper circuit 30B are connected to the input terminal 26 of the circuit in the LLC converter 10.

In such a case, the DC voltage Vout output from the LLC converter 10 can only be output in a fixed voltage range, as a voltage lower than the input DC voltage Vin (when the step-down chopper circuit 30A is combined) or as a voltage higher than the input DC voltage Vin (when the step-up chopper circuit 30B is combined). That is, the range of voltages that can be output with respect to the input voltage is limited.

### (Configuration of Chopper-LLC Integrated Circuit)

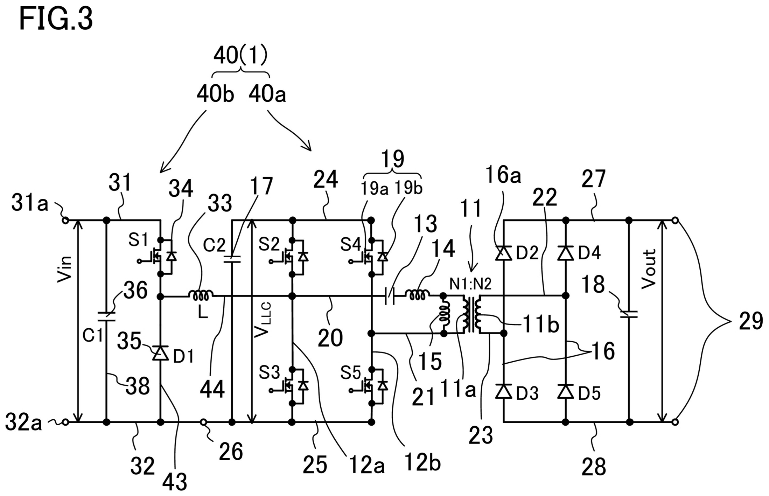

On the other hand, the DC/DC converter 1 to which the technique disclosed herein is applied is provided with a new circuit (a chopper-LLC integrated circuit, also simply referred to as an integrated circuit 40) in which a chopper circuit 40b is integrated with a converter circuit 40a including the LLC circuit. FIG. 3 shows an example of the integrated circuit 40.

The integrated circuit 40 has the same basic configuration as the aforementioned LLC converter 10 and the step-down chopper circuit 30A, except for the structure of the connecting portion. Thus, the same reference characters are used to represent components having the same configurations, and the description thereof will be simplified or omitted (the same applies to the variations below).

However, for convenience of description, the switching element 19a of the power device 34 (first device 34) of the step-down chopper circuit 30A will be referred to as a first switching element S1. The switching element 19a of the power device 19 arranged in the upper arm of the positive-side half-bridge circuit 12a will be referred to as a second switching element S2. The switching element 19a of the power device 19 arranged in the lower arm of the positive-side half-bridge circuit 12a will be referred to as a third switching element S3.

Similarly, the switching element 19a of the power device 19 arranged in the upper arm of the negative-side half-bridge circuit 12b will be referred to as a fourth switching element S4. The switching element 19a of the power device 19 arranged in the lower arm of the negative-side half-bridge circuit 12b will be referred to as a fifth switching element S5.

The diodes 16a and 35 will also be referred to as first to fifth diodes D1 to D5, as shown in FIG. 3. The capacitor 36 of the chopper circuit 40b will be referred to as a first capacitor C1. The primary-side smoothing capacitor 17 of the converter circuit 40a will be referred to as a second capacitor C2. The reactor 33 will be indicated by L.

In this integrated circuit 40, a portion corresponding to the positive-side output terminal 31b of the step-down chopper circuit 30A is connected to a portion between two power devices 19 of the positive-side half-bridge circuit 12a. On the other hand, a portion corresponding to the negative-side output terminal 32b of the step-down chopper circuit 30A is connected to the negative side of the input terminal 26 as in the conventional cases. A portion corresponding to the positive side of the input terminal 26 is omitted.

Thus, the integrated circuit 40 includes a bridge circuit 43 that is connected between the positive line 31 and the negative line 32. In this bridge circuit 43, the first device 34 and the diode 35 are arranged in series to each other. A portion of the bridge circuit 43 between the first device 34 and the diode 35 and a portion of the positive-side half-bridge circuit 12a between the two power devices 19 are connected by a connecting wire 44. The reactor 33 is arranged on this connecting wire 44.

When a DC voltage Vin is applied between the positive-side input terminal 31a and the negative-side input terminal 32a, the DC voltage output from the chopper circuit 40b is applied to an intermediate portion of the positive-side half-bridge circuit 12a. Therefore, when the duty cycle of PWM control in the converter circuit 40a is 50%, the DC voltage output from the chopper circuit 40b becomes 1/2 of the voltage V_{LLC} applied to the converter circuit 40a. The capacitance of the first capacitor C1 can be reduced.

### (Operation of Chopper-LLC Integrated Circuit)

According to this integrated circuit 40, both step-up and step-down operations can be performed.

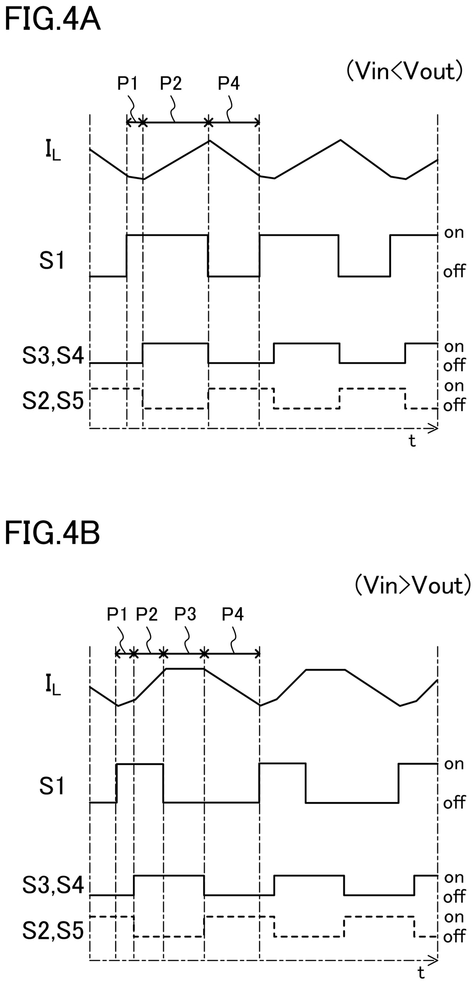

FIG. 4A shows switching waveforms during a step-up operation (input voltage Vin < output voltage Vout). FIG. 4B shows switching waveforms during a step-down operation (input voltage Vin > output voltage Vout).

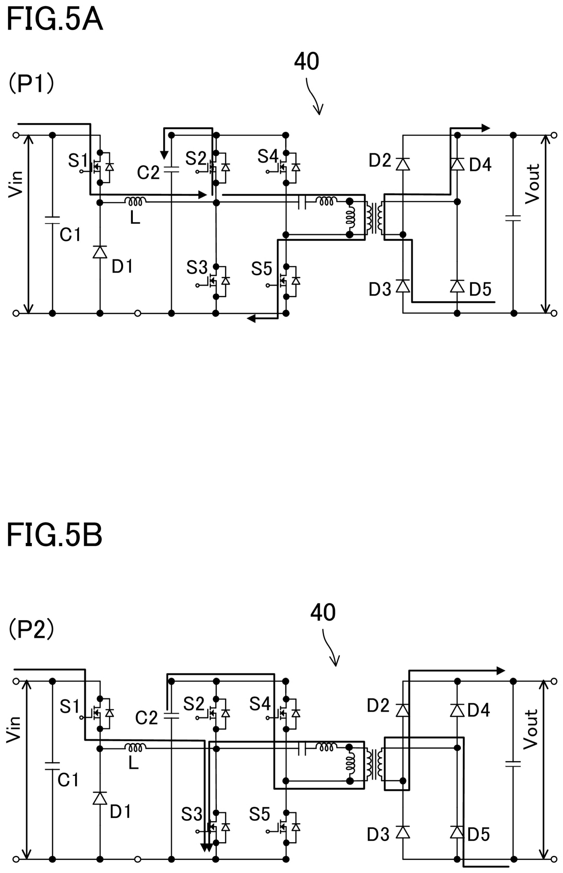

The second switching element S2 and the fifth switching element S5 are synchronized and subjected to switching control. The third switching element S3 and the fourth switching element S4 are synchronized and subjected to switching control. The uppermost graph in each figure represents a change in the current (reactor current I_{L} described later) flowing into the converter circuit 40a through the reactor L, as shown in FIG. 5A and other drawings.

FIG. 5A to FIG. 5D show images of current paths in each of periods P1 to P4 during the step-up operation and the step-down operation. FIG. 5A shows a current path in period P1 where the first switching element S1 is on (conductive) and the second and fifth switching elements S2 and S5 are on (while the third and fourth switching elements S3 and S4 are off, the same applies hereinafter). FIG. 5B shows a current path in period P2 where the first switching element S1 is on and the third and fourth switching elements S3 and S4 are on.

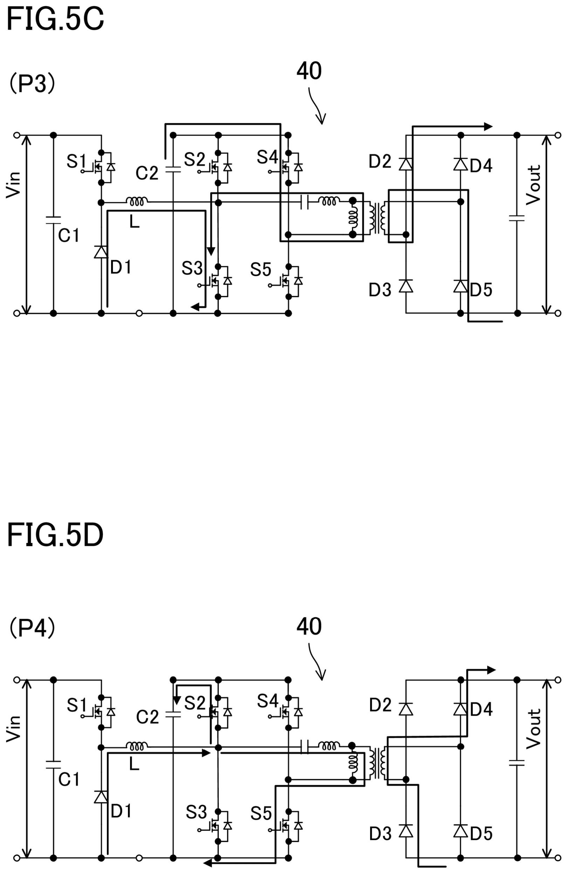

FIG. 5C shows a current path in period P3 where the first switching element S1 is off (non-conductive) and the third and fourth switching elements S3 and S4 are on. FIG. 5D shows a current path in period P4 where the first switching element S1 is off and the second and fifth switching elements S2 and S5 are on.

As shown in periods P1 and P2 in FIG. 4A and FIG. 4B, when the first switching element S1 is on and the third switching element S3 or the fifth switching element S5 is on, a voltage Vin from the DC power source 2 is applied to the DC/DC converter 1. As a result, the current flows into the converter circuit 40a through the first switching element S1, and flows out through the third switching element S3 or the fifth switching element S5, as shown in FIG. 5A and FIG. 5B. At this time, the reactor L is charged.

As shown in FIG. 5A, when the second switching element S2 and the fifth switching element S5 are on (period P1), part of the current is stored in the capacitor C2 through the second switching element S2. The rest of the current flows through the primary coil 11a of the transformer 11 and the fifth switching element S5. The amount of charge stored in the capacitor C2 is larger in the step-up operation than in the step-down operation due to a difference in the input voltage Vin.

Accordingly, on the secondary side of the converter circuit 40a, current flows through the third diode D3, the secondary coil 11b of the transformer 11, and the fourth diode D4, and the DC voltage Vout is output to the terminal on the output side.

On the other hand, as shown in FIG. 5B, when the third switching element S3 and the fourth switching element S4 are on (period P2), the current flows out through the third switching element S3. At this time, the reactor 33 is charged with power larger than that in the period P1.

Then, due to the discharge of the capacitor C2, the current flows through the fourth switching element S4, the primary coil 11a of the transformer 11, and the third switching element S3. At this time, the current flows from the negative side to the positive side in the primary coil 11a of the transformer 11.

Accordingly, on the secondary side of the converter circuit 40a, current flows through the fifth diode D5, the secondary coil 11b of the transformer 11, and the second diode D2, and the DC voltage Vout is output to the terminal on the output side.

By this adjustment in period P2, both step-up operation and step-down operation can be achieved. That is, period P2 during the step-up operation is set to be longer than that in the step-down operation (e.g., a duty cycle exceeding 50%). This increases the amount of current and the conduction time to the primary coil 11a of the transformer 11, thereby enabling the step-up operation.

On the other hand, period P2 during the step-down operation is set to be shorter than that during the step-up operation (e.g., a duty cycle of less than 50%). This decreases the amount of current and the conduction time to the primary coil 11a of the transformer 11, thereby enabling the step-down operation.

In periods P3 and P4 when the first switching element S1 is off, the voltage Vin from the DC power source 2 is not applied to the converter circuit 40a, as shown in FIG. 5C and FIG. 5D.

In this state, when the third switching element S3 and the fourth switching element S4 are on (period P3), a closed circuit is formed through the first diode D1, the reactor L, and the third switching element S3, as shown in FIG. 5C. Accordingly, the reactor L is discharged. Then, due to the discharge of the capacitor C2, the current flows through the fourth switching element S4, the primary coil 11a of the transformer 11, and the third switching element S3.

This switching control of period P3 is performed only during the step-down operation. That is, the control is performed in the step-down operation, but not in the step-up operation. This widens the output range.

In period P3, the current in the converter circuit 40a is maintained by the discharge of the capacitor C2, as shown in FIG. 4B. Accordingly, on the secondary side of the converter circuit 40a, current flows through the fifth diode D5, the secondary coil 11b of the transformer 11, and the second diode D2. The DC voltage Vout is output to a terminal on the output side of the DC/DC converter 1.

On the other hand, when the second switching element S2 and the fifth switching element S5 are on in this state (period P4), the reactor L is discharged, causing part of the current to flow through the primary coil 11a of the transformer 11, the fifth switching element S5, and the first diode D1, as shown in FIG. 5D. Then, the remaining current flows through the second switching element S2, charging the capacitor C2.

Accordingly, on the secondary side of the converter circuit 40a, current flows through the third diode D3, the secondary coil 11b of the transformer 11, and the fourth diode D4. The DC voltage Vout is output to a terminal on the output side of the DC/DC converter 1.

### <Control by Controller 4>

In the DC/DC converter 1, the controller 4 performs peak current control in the switching control of the first switching element S1, in order to downsize the reactor 33.

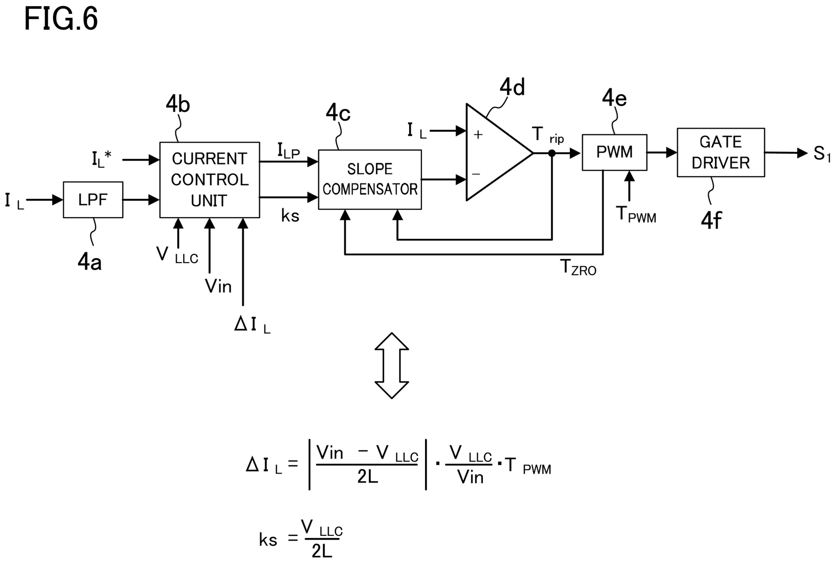

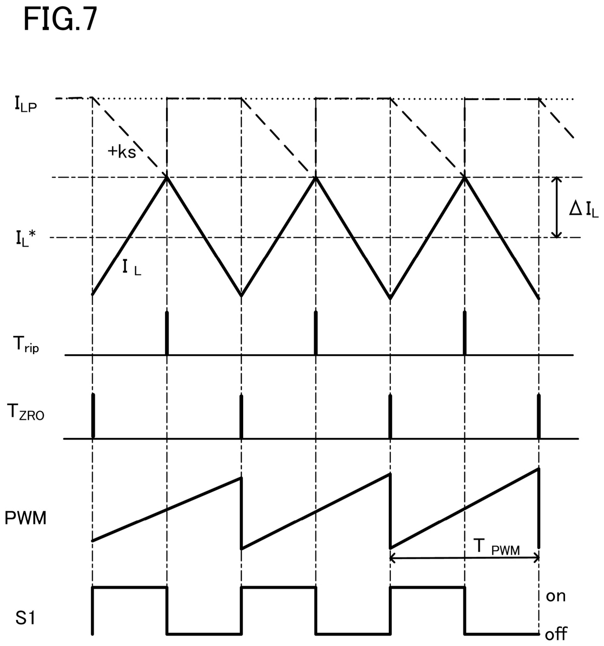

FIG. 6 shows a block diagram and related equations for peak current control. FIG. 7 shows a switching pattern and the like in the peak current control.

The controller 4 includes a low-pass filter (LPF) 4a, a current control unit 4b, a slope compensator 4c, a comparator 4d, a PWM control unit 4e, and a gate driver 4f.

I_{L} is a current (reactor current) output from the reactor L, and is a value (measured value) of the current. The reactor current I_{L} pulsates. I_{L}* is a command value of the reactor current I_{L}. I_{L}* corresponds to an average value of the reactor current I_{L}. The voltage V_{LLC} is a voltage value applied to the converter circuit 40a. Vin is a voltage value input to the DC/DC converter 1.

The current command value I_{L}*, the reactor current value I_{L} processed by the low-pass filter 4a, the voltage Vin applied to the DC/DC converter 1, the voltage V_{LLC} applied to the converter circuit 40a, and ΔI_{L} are input to the current control unit 4b.

ΔI_{L} is a value calculated by the equation shown in the lower part of FIG. 6. A PWM scheme of changing the duty cycle is used in the switching control of the first switching element S1. T_{PWM} is the switching cycle (a predetermined constant value) in the PWM control. Therefore, ΔI_{L} is calculated according to the voltage Vin and the voltage V_{LLC}. L is the inductance of the reactor L.

The current control unit 4b outputs I_{LP} and ks to the slope compensator 4c. I_{LP} is a current command value (peak current command value) in the peak current control. The ks is a value calculated by the equation shown in the lower part of FIG. 6. The ks corresponds to a predetermined slope value applied to the command value I_{LP} of the peak current control. The ks is generally used to suppress the low-frequency oscillations that occurs when the duty cycle exceeds 50%.

A set signal T_{ZRO} and a reset signal Tᵣᵢₚ are input to the slope compensator 4c. The set signal T_{ZRO} and the reset signal Tᵣᵢₚ are feedback values. The set signal T_{ZRO} is output at a timing corresponding to 0 degrees of the switching cycle. The reset signal Tᵣᵢₚ is output at a timing corresponding to the upper limit (peak) of the reactor current value I_{L}.

The set signal T_{ZRO} is fed back from the PWM control unit 4e. The reset signal Tᵣᵢₚ is fed back after the output from the comparator 4d. The slope compensator 4c sets or resets the peak current command value I_{LP} based on the set signal T_{ZRO} and the reset signal Tᵣᵢₚ.

The slope compensator 4c adds a slope to the peak current command value I_{LP} based on the peak current command value I_{LP} and ks, and outputs the same to the comparator 4d (the portion indicated by the inclined broken line in FIG. 7).

The comparator 4d compares its output value with the reactor current value I_{L}. Then, the comparator 4d outputs the reset signal Tᵣᵢₚ when its output value matches the reactor current value I_{L} (the matching part in FIG. 7). The reset signal Tᵣᵢₚ is fed back to the slope compensator 4c.

The reset signal Tᵣᵢₚ is also output to the PWM control unit 4e. T_{PWM} is also input to the PWM control unit 4e. Based on these signals, the PWM control unit 4e performs PWM control of the switching of the first switching element S1 while changing the duty cycle.

Specifically, as shown in FIG. 7, a signal varying with the switching cycle is output to the gate driver 4f. The gate driver 4f switches the first switching element S1 in accordance with the timing of output of the set signal T_{ZRO} and the reset signal Tᵣᵢₚ. Specifically, at the timing when the set signal T_{ZRO} is output, a drive voltage is output to turn on the first switching element S1. At the timing when the reset signal Tᵣᵢₚ is output, the output of the drive voltage is stopped, and the first switching element S1 is turned off.

The duty cycle varies depending on the timing of the reset signal Tᵣᵢₚ. By performing such peak current control, the pulsation of the reactor current can be increased as compared to average current control. As a result, the reactor L can be downsized.

### (Design of LLC Circuit)

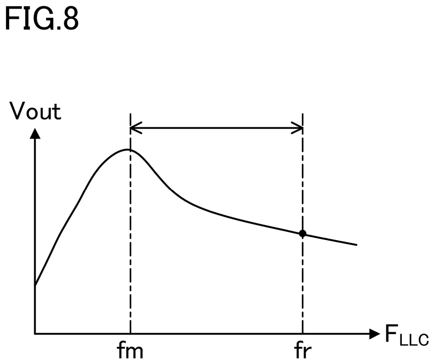

FIG. 8 shows a resonance curve of the LLC circuit. In the LLC circuit, it is common to control the output voltage within an operating frequency range between a lower limit fm and an upper limit fr of the resonance frequency F_{LLC}, as indicated by an arrow. The lower limit fm and the upper limit fr of the resonance frequency F_{LLC} are determined based on the performance of the resonant inductance 14, the magnetizing inductance 15, and the resonant capacitor 13 that constitute the LLC circuit.

On the other hand, the chopper circuit 40b is integrated into this DC/DC converter 1, so the power conversion can be performed by the chopper circuit 40b. Therefore, the operating frequency of the LLC circuit is preferably fixed to the upper limit fr of the resonance frequency F_{LLC}.

This configuration can simplify the control. Further, the magnetizing inductance 15 can be made sufficiently large. Further, zero voltage switching (ZVS) can be achieved, that is, switching can be performed in a state where the voltage is zero, over a wide range of load current flowing through the LLC circuit. Therefore, switching losses can be reduced, enabling efficient operation.

Further, the turns ratio (N1:N2) in the transformer 11 is more preferably set to 1:1.

In this way, it is possible to downsize the transformer 11 as well. Accordingly, the LLC circuit can be reduced in size and improved in efficiency.

According to the DC/DC converter 1 configured as described above, the chopper circuit 40b is a portion that performs control of charging, and the converter circuit 40a is a portion that functions as an insulation part. The functional role of each circuit in the DC/DC converter 1 is clarified. Accordingly, as described above, the design of the LLC circuit and its control becomes easier.

### (Confirmation of Effects by Simulation)

In the above-described DC/DC converter 1, a simulation test was conducted to confirm the effects of the technique disclosed herein. The simulation was conducted with the same input voltage Vin and different output voltages Vout in three cases (first case, second case, third case).

The input voltage Vin was set to 300 V in all cases. The output voltage Vout in the first case was set to 200 V. The output voltage Vout in the second case was set to 300 V. The output voltage Vout in the third case was set to 400 V. The first case corresponds to the step-down operation. The third case corresponds to the step-up operation. The output power Pout was set to 4 kW in all cases.

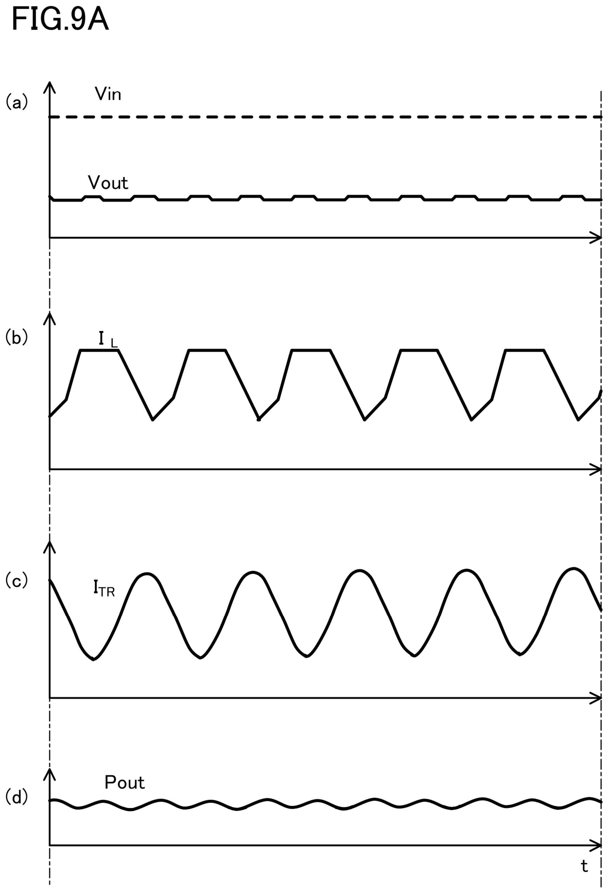

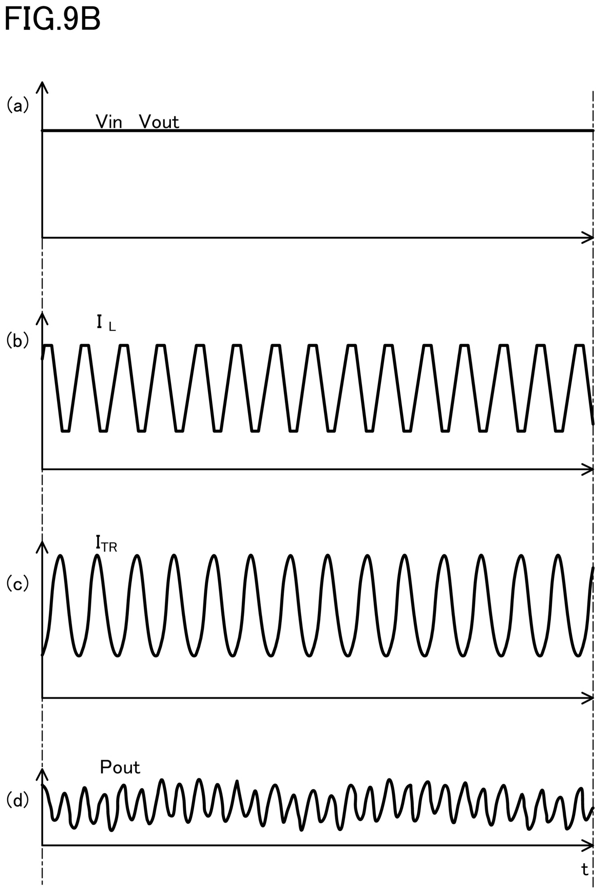

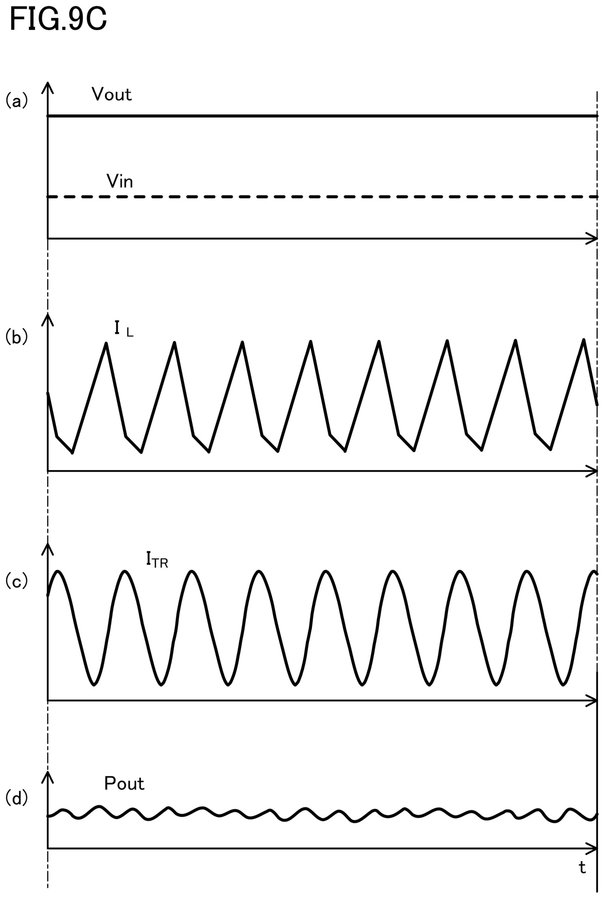

The simulation results of the first case are shown in FIG. 9A. The simulation results of the second case are shown in FIG. 9B. The simulation results of the third case are shown in FIG. 9C. The (a) in each figure shows the waveforms of the input power to the DC/DC converter 1 and the output voltage. The (b) in each figure shows a waveform of the reactor current. The (c) in each figure shows a waveform of the current applied to the transformer 11. The (d) in each figure shows a waveform of the output power of the DC/DC converter 1.

This DC/DC converter 1 can control the output current from the chopper circuit 40b to the converter circuit 40a by using the integrated circuit 40 and employing peak current control. As a result, the DC/DC converter 1 can be operated regardless of the magnitude of the input voltage and the output voltage, and both the step-up operation and the step-down operation can be performed smoothly over a relatively wide range.

### <Variation 1>

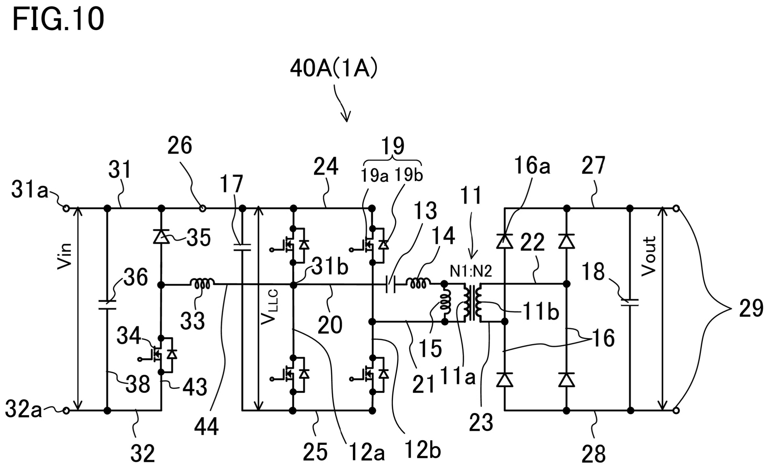

FIG. 10 shows Variation 1 (DC/DC converter 1A) of a power conversion device to which the technique disclosed herein is applicable. In the integrated circuit 40 of the aforementioned DC/DC converter 1, a step-down chopper circuit 30A was used. On the other hand, in the DC/DC converter 1A, a step-up chopper circuit 30B is used to form an integrated circuit 40A.

The integrated circuit 40A has the same basic configuration as the aforementioned LLC converter 10 and the step-up chopper circuit 30B, except for the structure of the connecting portion.

According to the integrated circuit 40A, unlike the conventional step-up chopper circuit 30B, a portion corresponding to the positive-side output terminal 31b of the step-up chopper circuit 30B is connected to the positive side of the input terminal 26. On the other hand, the portion corresponding to the negative-side output terminal 32b of the step-up chopper circuit 30B and the portion corresponding to the negative side of the input terminal 26 are omitted.

Further, the integrated circuit 40A includes a bridge circuit 43 that is arranged between the positive line 31 and the negative line 32. In this bridge circuit 43, the first device 34 and the diode 35 are arranged in series to each other. However, in the integrated circuit 40A, the first device 34 is arranged closer to the negative line 32, while the diode 35 is arranged closer to the positive line 31, opposite to the integrated circuit 40.

A portion of the bridge circuit 43 between the first device 34 and the diode 35 and a portion of the positive-side half-bridge circuit 12a between the two power devices 19 are connected by a connecting wire 44. The reactor 33 is arranged on this connecting wire 44.

The DC/DC converter 1A using such an integrated circuit 40A can also be operated under the same control as the aforementioned DC/DC converter 1. For example, the switching waveforms in FIG. 4A and FIG. 4B, as well as the switching patterns in the peak current control shown in FIG. 7, are the same in this DC/DC converter 1A.

### <Variation 2>

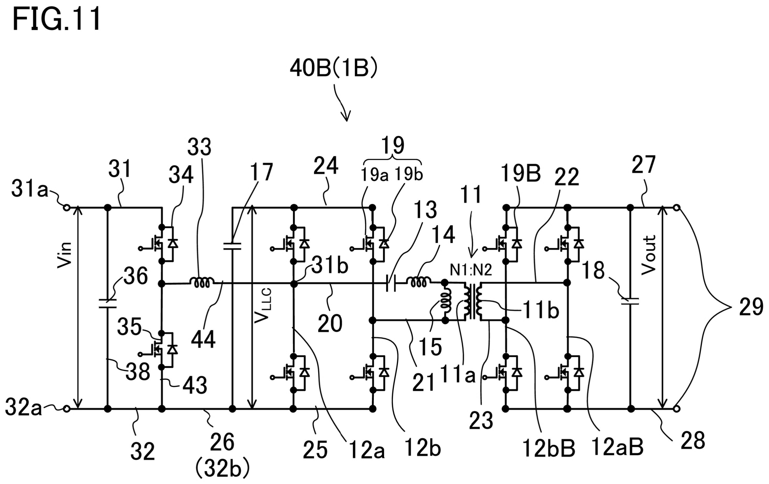

FIG. 11 shows Variation 2 (DC/DC converter 1B) of a power conversion device to which the technique disclosed herein is applicable. The integrated circuit 40 of the aforementioned DC/DC converter 1 is configured to convert the DC power and output the converted DC power unidirectionally from the input side, on which the chopper circuit 40b is arranged, to the output side.

On the other hand, the integrated circuit 40B of the DC/DC converter 1B is configured to convert the DC power and output the converted DC power bidirectionally from the input side to the output side and from the output side to the input side (the so-called CLLC circuit).

The input side configuration of this DC/DC converter 1B is the same as that of the aforementioned DC/DC converter 1. The output side configuration of this DC/DC converter 1B differs from that of the aforementioned DC/DC converter 1.

That is, on the secondary side of the converter circuit 40a, a positive-side half-bridge circuit 12aB and a negative-side half-bridge circuit 12bB are arranged. Further, the positive side of the secondary coil 11b and a portion between the two power devices 19B of the positive-side half-bridge circuit 12aB on the secondary side are connected by the secondary-side upper intermediate wiring 22. The negative side of the secondary coil 11b and a portion between the two power devices 19B of the negative-side half-bridge circuit 12bB on the secondary side are connected by the secondary-side lower intermediate wiring 23.

### <Variation 3>

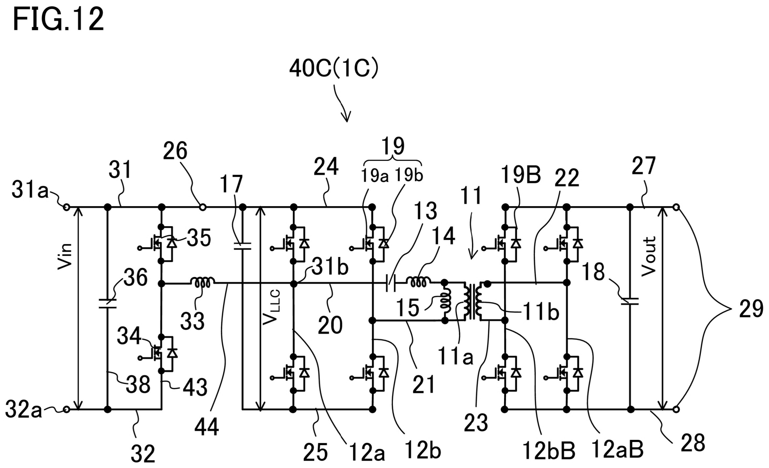

FIG. 12 shows Variation 3 (DC/DC converter 1C) of a power conversion device to which the technique disclosed herein is applicable. The DC/DC converter 1B of Variation 2 is a modification in which the integrated circuit 40 using the step-down chopper circuit 30A is modified into a bidirectional configuration.

On the other hand, the integrated circuit 40C of the DC/DC converter 1C in Variation 3 is a modification in which the integrated circuit 40A of Variation 1 using the step-up chopper circuit 30B is modified into a bidirectional configuration. The difference in configuration between the integrated circuit 40C of Variation 3 and the integrated circuit 40A of Variation 1 is the same as the difference in configuration between the integrated circuit 40B of Variation 2 and the integrated circuit 40. The description of the difference is therefore omitted.

The DC/DC converters 1B and 1C of Variation 2 and Variation 3 are capable of bidirectional power conversion, thereby enhancing convenience.

The technique disclosed herein is not limited to the above-mentioned embodiments and also includes various other configurations. For example, the above-mentioned embodiments and variations are examples. Each of these embodiments and variations may be combined or modified as appropriate according to the specification of the practical DC/DC converter.

### DESCRIPTION OF REFERENCE CHARACTERS

- 1: DC/DC Converter (Power Conversion Device)
- 2: DC Power Source
- 3: Device such as Load and Battery
- 4: Controller
- 10: LLC converter
- 11: Transformer
11a Primary Coil
11b Secondary Coil
- 12: Half-Bridge Circuit
12a Positive-Side Half-Bridge Circuit
12b Negative-Side Half-Bridge Circuit
- 13: Resonant Capacitor
- 14: Resonant Inductance
- 15: Magnetizing Inductance
- 16: Rectifier Bridge Circuit
16a Diode
- 17: Primary-Side Smoothing Capacitor (Second Capacitor)
- 18: Secondary-Side Smoothing Capacitor
- 19: Power Device
19a Switching Element
19b Freewheeling Diode
- 20: Primary-Side Upper Intermediate Wiring
- 21: Primary-Side Lower Intermediate Wiring
- 22: Secondary-Side Upper Intermediate Wiring
- 23: Secondary-Side Lower Intermediate Wiring
- 24: Primary-Side Positive Main Line
- 25: Primary-Side Negative Main Line
- 26: Input Terminal
- 27: Secondary-Side Positive Main Line
- 28: Secondary-Side Negative Main Line
- 29: Output Terminal
- 30A: Step-Down Chopper Circuit
- 30B: Step-Up Chopper Circuit
- 31: Positive Line
31a Positive-Side Input Terminal
31b Positive-Side Output Terminal
- 32: Negative Line
32a Negative-Side Input Terminal
32b Negative-Side Output Terminal
- 33: Reactor
- 34: Power Device
- 35: Diode
- 36: Capacitor (First Capacitor)
- 37: Output-Side Bridge Line
- 38: Input-Side Bridge Line
- 40: Integrated Circuit
40a Converter Circuit
40b Chopper Circuit
- 43: Bridge Circuit
- 44: Connecting Wire

## Claims

1. A power conversion device comprising a circuit in which a chopper circuit is integrated with a converter circuit including an LLC circuit, wherein
the converter circuit includes:
a transformer having a primary coil and a secondary coil;
a positive-side half-bridge circuit and a negative-side half-bridge circuit, each having two power devices connected in series, each of the power devices including a switching element and a freewheeling diode connected in antiparallel with the switching element;
an upper intermediate wiring connecting an end of the primary coil on a positive side and a portion between the two power devices of the positive-side half-bridge circuit;
a lower intermediate wiring connecting an end of the primary coil on a negative side and a portion between the two power devices of the negative-side half-bridge circuit;
a resonant capacitor arranged on the upper intermediate wiring;
a positive main line connected to positive sides of the positive-side half-bridge circuit and the negative-side half-bridge circuit;
a negative main line connected to negative sides of the positive-side half-bridge circuit and the negative-side half-bridge circuit; and
a second capacitor connected between the positive main line and the negative main line, while being in parallel with the positive-side half-bridge circuit and the negative-side half-bridge circuit; and
the chopper circuit includes:
a positive line connected to a positive-side input terminal;
a negative line connected to a negative-side input terminal;
a first capacitor connected between the positive line and the negative line;
a bridge circuit connected between the positive line and the negative line, the bridge circuit including a first device constituted by the power device and a diode, the first device and the diode being arranged in series;
a connecting wire connecting a portion between the first device and the diode of the bridge circuit and a portion between the two power devices of the positive-side half-bridge circuit; and
a reactor arranged on the connecting wire,
the power conversion device further comprises a controller configured to perform switching control of each of the switching elements, and
the controller performs both step-up and step-down operations by switching, in different patterns, a first switching element that is the switching element of the first device.

2. The power conversion device of claim 1, wherein
the switching control of the first switching element employs a PWM scheme that changes a duty cycle, and
a period in which the first switching element is turned on and the switching element of the power device arranged in a lower arm of the positive-side half-bridge circuit and the switching element of the power device arranged in an upper arm of the negative-side half-bridge circuit are turned on, is set to be longer in the step-up operation than in the step-down operation.

3. The power conversion device of claim 2, wherein
a period in which the first switching element is turned off and the switching element of the power device arranged in the lower arm of the positive-side half-bridge circuit and the switching element of the power device arranged in the upper arm of the negative-side half-bridge circuit are turned on, is set in the step-down operation and is not set in the step-up operation.

4. The power conversion device of claim 1, wherein
the controller performs peak current control to perform switching of the first switching element.

5. The power conversion device of claim 1, wherein
an operating frequency of the LLC circuit is fixed to an upper limit of a resonance frequency.

6. The power conversion device of claim 5, wherein
a turns ratio of the primary coil to the secondary coil is set to 1:1.

7. The power conversion device of claim 1, wherein
the first device in the bridge circuit is arranged closer to the positive line, whereas the diode in the bridge circuit is arranged closer to the negative line, and
the negative line and the negative main line are connected to each other.

8. The power conversion device of claim 1, wherein
the first device in the bridge circuit is arranged closer to the negative line, whereas the diode in the bridge circuit is arranged closer to the positive line, and
the positive line and the positive main line are connected to each other.

9. The power conversion device of claim 7 or 8, further comprising:
two rectifier bridge circuits in which two diodes are connected in series to each other; and
a secondary-side intermediate wiring connecting each of ends of the secondary coil and a portion between the two diodes of a corresponding one of the rectifier bridge circuits,
wherein
the power conversion device is configured to convert DC power and unidirectionally output the DC power thus converted, from a primary side to a secondary side.

10. The power conversion device of claim 7 or 8, further comprising:
two secondary-side half-bridge circuits in which two power devices are connected in series to each other; and
a secondary-side intermediate wiring connecting each of ends of the secondary coil and a portion between the two power devices of a corresponding one of the secondary-side half-bridge circuits,
wherein
the power conversion device is configured to convert DC power and bidirectionally output the DC power thus converted, from a primary side to a secondary side and from the secondary side to the primary side.
